# EUROPÄISCHE PATENTSCHRIFT

(11) **EP 0 651 106 B1**
(45) Veröffentlichungstag und Bekanntmachung des Hinweises auf die Patenterteilung: **24.02.1999**
(21) Anmeldenummer: 94114422.2
(22) Anmeldetag: 14.09.1994
(51) Int. Cl.: E04B 9/00, E04B 9/02, F24D 3/16, F24F 5/00

(54) **Kühldecke zur Raumluftklimatisierung**
Cooling ceiling for room air conditioning
Plafond réfrigérant pour la climatisation des pièces

(30) Priorität: 03.11.1993 DE 9316791 U
(43) Veröffentlichungstag der Anmeldung: 03.05.1995
(73) Patentinhaber: Hewing GmbH, D-48607 Ochtrup (DE)
(72) Erfinder: Homm, Karl-Georg, D-45768 Marl (DE); Wittkämper, Michael, D-48683 Ahaus (DE)
(74) Vertreter: Hilleringmann, Jochen, Dipl.-Ing.

(56) Entgegenhaltungen:
- EP-A- 0 552 690
- WO-A-91/13294
- WO-A-93/04322
- DE-U- 9 316 791
- US-A- 4 766 951

## Beschreibung

Die Erfindung bezieht sich auf eine Kühldecke zur Raumluftklimatisierung mit einem von Kühlwasser durchströmten Rohrsystem nach dem Oberbegriff des Anspruchs 1 und wie aus US-A-4 766 951 bekannt.

Bei bekannten Kühldecken dieser Art sind die auf jeweils als Blechpaneele ausgebildeten Deckenelementen aufliegenden Kühlrohre auf der zur Decke gewandten Seite mit einer schalldämmenden Akustikmatte bedeckt, so daß der beabsichtigte Wärmeaustausch in diesem zur Decke gerichteten Bereich des Rohrsystems nachteilig eingeschränkt ist.

Aus US-A-4 766 951 ist eine Kühldecke zur Raumluftklimatisierung mit einem von Kühlwasser durchströmbaren Rohrsystem bekannt. Dieses Rohrsystem ist zumindest bereichsweise zwischen der Gebäudedecke und im Abstand zu dieser angeordneten Deckenelementen angeordnet. Ferner ist das Rohrsystem über die Deckenelemente tragende Halteglieder in der Einbaulage festgelegt. In der Einbaulage liegen die Kühlrohre des Rohrsystems in einem den Deckenelementen gegenüberliegenden Bereich einerseits an diesen an, während sie andererseits zu einem der Gebäudedecke zugewandten Deckenhohlraum hin von schalldämmenden Akustikmatten überspannt sind. Die Halteglieder sind mit einer eine Verlegeebene für die Akustikmatten definierenden Stützvorrichtung verbunden, auf der sie in Einbaulage abgestützt sind und zwischen deren Unterseite und den in der Einbaulage befindlichen Kühlrohren ein Zwischendeckenraum gebildet ist.

Der Erfindung liegt die Aufgabe zugrunde, eine Kühldecke zur Raumluftklimatisierung so auszubilden, daß mit geringem technischen Aufwand sowohl eine Schalldämmung im Bereich der Decke als auch ein verbesserter Wärmeaustausch erreichbar sind.

Die Erfindung löst diese Aufgabe durch eine Kühldecke mit den Merkmalen des Anspruchs 1. Hinsichtlich wesentlicher weiterer Ausgestaltungen wird auf die Ansprüche 2 bis 5 verwiesen.

Mit der erfindungsgemäßen Ausbildung der Kühldecke weist diese im Bereich des Zwischendeckenraums eine vorteilhafte Konvektionszone auf, die einen ungehinderten Wärmeaustausch im Bereich des vollständig von aufsteigender Warmluft umströmten Kühlrohrsystems ermöglicht, wobei gleichzeitig mit der in einem durch das Halteglied und die Stützvorrichtung definierten Abstand zu den Kühlrohren angeordneten Akustikmatte eine zuverlässige Schalldämmung erreicht ist.

Die auf dem Deckenelement frei aufliegenden Kühlrohre entziehen einerseits dem Deckenelement die Wärmeenergie und können andererseits vorteilhaft die Kühlleistung der Kühldecke dadurch verbessern, daß die in den Zwischendeckenraum einströmende Warmluft durch entstehende Turbulenzen ungehindert an die von Kühlwasser durchströmten Kühlrohre gelangt und die so durch Konvektion abgekühlte Raumluft über entsprechende Durchgangsöffnungen im Bereich der Deckenelemente und/oder eine Fuge zwischen diesen in den Nutzraum zurückströmen kann.

Die Stützvorrichtung für die Akustikmatte ist dabei als ein mit dem Halteglied verbindbares und mit geringem technischen Aufwand montierbares Bauteil vorgesehen, das mit geringem Raumbedarf eine flexible Anpassung der Höhe des Zwischendeckenraumes an den jeweils verfügbaren Einbauraum im Bereich der Decke ermöglicht.

Weitere Einzelheiten und Vorteile der Erfindung ergeben sich aus der nachfolgenden Beschreibung und der Zeichnung, die ein Ausführungsbeispiel einer erfindungsgemäßen Kühldecke schematisch veranschaulicht. In der Zeichnung zeigen:
- Fig. 1: eine perspektivische Ausschnittsdarstellung einer Kühldecke nach der Erfindung mit jeweils oberhalb von Haltegliedern für das Rohrsystem abgestützten Akustikmatten, und
- Fig. 2: eine geschnittene Vorderansicht auf die Kühldecke gemäß einer Linie II-II in Fig. 1.

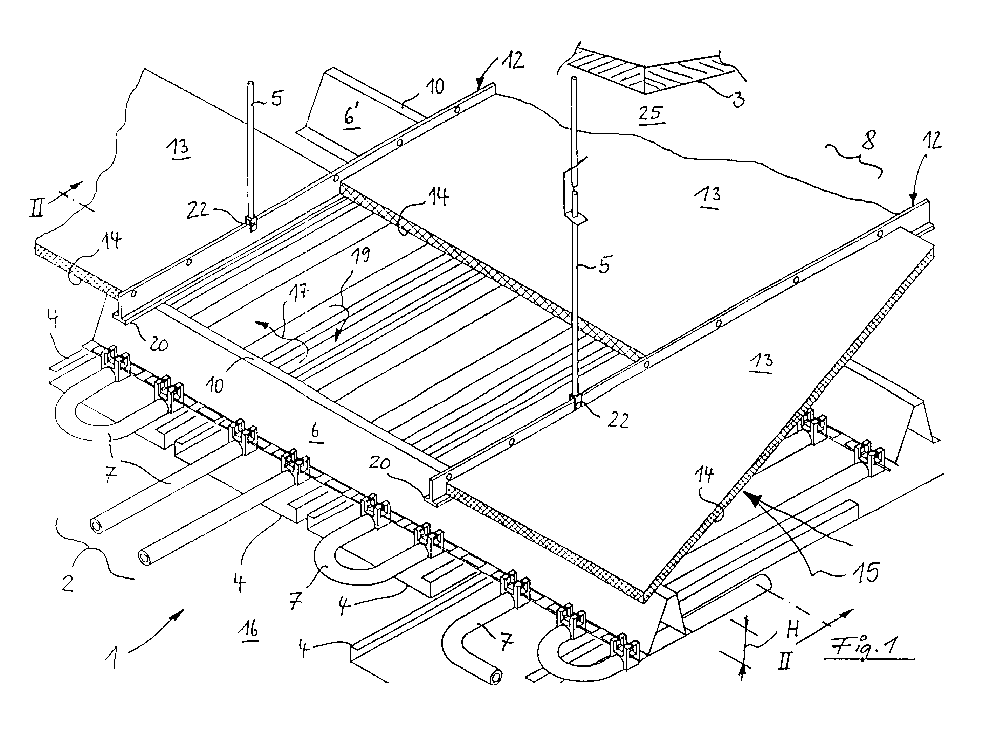

In Fig. 1 ist eine insgesamt mit 1 bezeichnete Kühldecke in einer perspektivischen Ansicht dargestellt, deren von Kühlwasser durchströmtes Rohrsystem 2 zwischen der Decke 3 eines Gebäudes und im Abstand unter dieser angeordneten, als Paneele ausgebildeten Deckenelementen 4 vorgesehen ist.

Die Deckenelemente 4 sind dabei über ein von der Decke 3 mittels jeweiliger Zwischenglieder 5 abgehangenen Haltegliedes 6 in der Einbaulage festgelegt, wobei die Kühlrohre 7 des Rohrsystems 2 einerseits auf dem Deckenelement 4 linienförmig aufliegen und andererseits die Kühlrohre 7 von einer Akustikmatte 8 übergriffen sind.

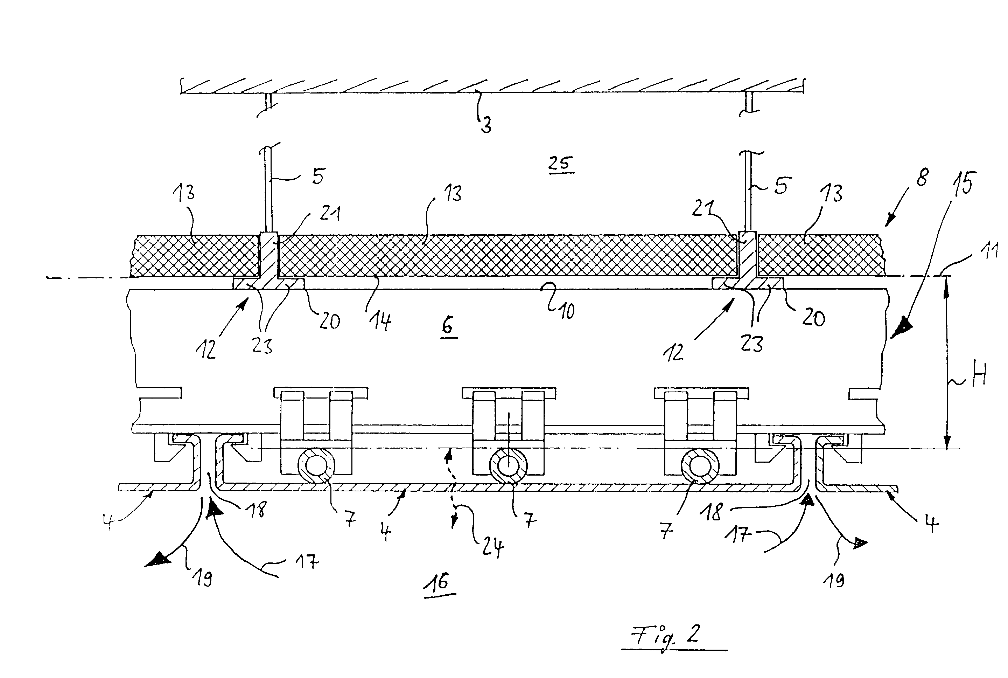

In vorteilhafter Ausbildung ist die Kühldecke 1 im Bereich der jeweiligen Halteglieder 6,6' auf deren der Decke 3 zugewandten Oberseite 10 mit einer eine Verlegeebene 11 (Fig. 2) für die Akustikmatte 8 definierenden Stützvorrichtung 12 versehen, wobei mehrere Lagenteile 13 der Akustikmatte 8 in der dargestellten Einbaulage auf der Stützvorrichtung 12 so abgestützt sind, daß zwischen einer jeweiligen Unterseite 14 der Akustikmatte 8 und den in Einbaulage befindlichen Kühlrohren 7 ein eine Höhe H aufweisender Zwischendeckenraum 15 gebildet ist.

Die geschnittene Seitendarstellung gemäß Fig. 2 verdeutlicht, daß mit dem Zwischendeckenraum 15 ein nach oben zur Decke 3 hin mittels der Akustikmatte 8 weitgehend geschlossener und gleichzeitig von einem unteren Nutzraum 16 zugänglicher Konvektionsraum für aufsteigende Warmluft (Pfeil 17) gebildet ist.

Der Zwischendeckenraum 15 ist dabei in der dargestellten Ausführungsform mit den weitgehend geschlossene Bauteile bildenden Deckenelementen 4 über jeweils zwischen diesen belassene Fugen 18 für die Warmluft (in Pfeilrichtung 17) zugänglich bzw. kann über diese Fugen 18 die gekühlte Luftströmung (in einer Pfeilrichtung 19) in den Nutzraum 16 zurückgeleitet werden.

Ebenso ist denkbar, die Deckenelemente 4 zumindest bereichsweise mit Durchgangsöffnungen (nicht dargestellt) zu versehen, mit denen die Strömungsverhältnisse (Pfeile 17,19) verbessert und eine schneller verfügbare Kühlwirkung der Kühldecke 1 dadurch erreichbar ist, daß unmittelbar neben den auf den Deckenelementen 4 aufliegenden Kühlrohren 7 ein Luftaustausch (Pfeil 24) zwischen dem Zwischendeckenraum 15 und dem Nutzraum 16 erfolgt.

In zweckmäßiger Ausführungsform ist die Stützvorrichtung 12 für die Akustikmatte 8 von jeweils parallel im Abstand zueinander angeordneten T-Profilträgern 20 gebildet, deren langer Schenkel 21 jeweils über ein Halteteil 22 (Fig. 1) mit dem Zwischenglied 5 verbunden und an der Decke 3 festgelegt ist. Der T-Profilträger weist auf der dem Halteteil 22 abgewandten Seite vorzugsweise zwei gleich lange Auflageschenkel 23 auf, die einerseits die Akustikmatte 8 randseitig abstützen und andererseits mit dem jeweiligen Halteglied 6,6' verbunden sind.

Mit dieser überaus einfachen Stützvorrichtung 12 können unterschiedlich bemessene, an den Abstand der T-Profilträger 20 angepaßte Lagenteile 13 der Akustikmatte 8 ohne zusätzliche Hilfsmittel so auf die Auflageschenkel 23 aufgeschoben werden, daß der Zwischendeckenraum 15 auch zu einem Deckenhohlraum 25 im Bereich der Decke 3 weitgehend dicht abgeschlossen ist.

## Patentansprüche

1. Kühldecke zur Raumluftklimatisierung mit einem von Kühlwasser durchströmten Rohrsystem (2), das zumindest bereichsweise zwischen der Decke (3) des Gebäudes und im Abstand zu sowie unter dieser angeordneten Deckenelementen (4) vorgesehen und über ein die Deckenelemente (4) tragendes Halteglied (6,6') in der Einbaulage festgelegt ist, in der die Kühlrohre (7) des Rohrsystems (2) in einem dem Deckenelement (4) gegenüberliegenden Bereich einerseits an diesem anliegen und andererseits zu einem Deckenhohlraum (25) hin von schalldämmenden Akustikmatten (8) übergriffen sind, wobei das Halteglied (6,6') mit einer eine Verlegeebene (11) für die Akustikmatten (8) definierenden Stützvorrichtung (12) verbunden ist, auf der die Akustikmatten (8) in der Einbauablage abgestützt sind, und wobei zwischen den Unterseiten (14) der Akustikmatten (8) und den sich in ihrer Einbaulage befindlichen Kühlrohren (7) ein Zwischendeckenraum (15) gebildet ist, **dadurch gekennzeichnet,** daß das Halteglied (6,6') auf seiner der Decke zugewandten Oberseite mit der Stützvorrichtung (12) verbunden ist.

2. Kühldecke nach Anspruch 1, dadurch gekennzeichnet, daß der Zwischendeckenraum (15) als ein nach oben hin durch die Akustikmatten (8) weitgehend geschlossener und von unten für aufsteigende Warmluft (17) zugänglicher Konvektionsraum ausgebildet ist.

3. Kühldecke nach Anspruch 1 oder 2, dadurch gekennzeichnet, daß der Zwischendeckenraum (15) über jeweils zwischen den Deckenelementen (4) belassene Fugen (18) zugänglich ist.

4. Kühldecke nach einem der Ansprüche 1 bis 3, dadurch gekennzeichnet, daß die Deckenelemente (4) zumindest bereischsweise mit Durchgangsöffnungen versehen sind.

5. Kühldecken nach einem der Ansprüche 1 bis 4, dadurch gekennzeichnet, daß die Stützvorrichtung (12) parallel im Abstand zueinander angeordnete T-Profilträger (20) aufweist, deren lange Schenkel (21) jeweils über ein Halteteil (5) an der Decke (3) festlegbar sind und deren kurze Auflageschenkel (23) einerseits die Akustikmatten (8) randseitig abstützen und andererseits mit dem Halteglied (6,6') verbunden sind.

## Claims

1. A cooling ceiling for air conditioning a room with a system of pipes (2) through which cooling water flows, the system being provided at least in regions between the ceiling (3) of a building and ceiling elements (4) spaced below the ceiling and being fixed in the mounting position by means of a holding element (6, 6') supporting the ceiling elements (4), the cooling pipes (7) of the pipe system (2) in a portion opposite said ceiling element (4) on the one hand abutting the same when in the mounting position and, on the side directed toward a ceiling cavity (25), being embraced by sound-insulating acoustic mats (8), on the other hand, the holding element (6, 6') being connected with a supporting device (12) defining a plane (11) for placing the acoustic mats (8) on which the acoustic mats (8) are supported in the mounting position, and wherein an intermediate ceiling space (15) is formed between the lower surfaces (14) of the acoustic mats (8) and the cooling pipes (7) in the mounted position, characterized in that the upper surface of said holding element (6, 6'), facing the ceiling, is connected with the supporting device (12).

2. The cooling ceiling of claim 1, characterized in that said intermediate ceiling space (15) is formed as a convection space substantially closed to the upper side and accessible from below for rising warm air (17).

3. The cooling ceiling of claim 1 or 2, characterized in that said intermediate ceiling space (15) is accessible via gaps (18) left between the ceiling elements (4).

4. The cooling ceiling of one of claims 1 to 3, characterized in that passage openings are provided at least in portions of said ceiling elements (4).

5. The cooling ceiling of one of claims 1 to 4, characterized in that said supporting device (12) comprises profiled T beams (20) arranged in parallel and with a mutual distance, the longer legs (21) being adapted to be fixed to the ceiling (3) by means of a holding member (5) and the shorter supporting legs (23) supporting the edges of said acoustic mats (8), on the one hand, and being connected with said holding element (6, 6'), on the other hand.

## Revendications

1. Plafond réfrigérant pour la climatisation de pièces comportant un système de tuyauterie (2) parcouru par de l'eau de refroidissement, qui est prévu, au moins par endroits, entre le plafond (3) du bâtiment et des éléments de plafond (4) disposés à distance du plafond et au-dessous de celui-ci et qui est fixé en position de montage par un élément de retenue (6, 6') supportant les éléments de plafond (4), dans lequel les tuyaux de refroidissement (7) du système de tuyauterie (2) d'une part s'appuient dans une zone faisant face à l'élément de plafond (4) sur celui-ci et d'autre part sont recouverts en direction d'une cavité de plafond (25) par des mats acoustiques (8) insonorisants, l'élément de retenue (6, 6') étant relié à un dispositif de soutien (12) définissant un plan de pose (11) pour les mats acoustiques (8), sur lequel les mats acoustiques (8) sont soutenus dans la position de montage, et un faux plafond (15) étant formé entre les faces inférieures (14) des mats acoustiques (8) et les tuyaux de refroidissement (7) se trouvant dans leur position de montage, caractérisé en ce que l'élément de retenue (6, 6') est relié au dispositif de soutien (12) sur sa face supérieure tournée vers le plafond.

2. Plafond réfrigérant selon la revendication 1, caractérisé en ce que le faux plafond (15) est conçu comme un espace de convection largement fermé vers le haut par les mats acoustiques (8) et accessible par en bas à l'air chaud (17) ascendant.

3. Plafond réfrigérant selon l'une des revendications 1 ou 2, caractérisé en ce que le faux plafond (15) est accessible par des joints (18) ménagés entre les éléments de plafond (4).

4. Plafond réfrigérant selon l'une des revendications 1 à 3, caractérisé en ce que les éléments de plafond (4) sont pourvus au moins par endroits d'ouvertures de passage.

5. Plafond réfrigérant selon l'une des revendications 1 à 4, caractérisé en ce que le dispositif de soutien (12) présente des supports de profilé en T (20) disposés parallèlement et espacés les uns des autres, dont les branches longues (21) peuvent être fixées au plafond (3) par une pièce de retenue (5) et dont les branches courtes de support (23) soutiennent d'une part les mats acoustiques (8) sur le bord et sont reliées d'autre part à l'élément de retenue (6, 6').
